# EUROPEAN PATENT APPLICATION

(11) **EP 2 924 429 A1**
(43) Date of publication of application: **30.09.2015**
(21) Application number: 14198126.6
(22) Date of filing: 16.12.2014
(51) Int. Cl.: G01N 30/06

(54) **Gas phase component analyzer**

(30) Priority: 26.03.2014 JP 2014064809; 16.06.2014 JP 2014123421
(71) Applicant: Frontier Laboratories Ltd., Koriyama-shi Fukushima 963-8862 (JP)
(72) Inventor: Watanabe, Chuichi, Koriyama-shi, Fukushima 963-8862 (JP); Watanabe, Atsushi, Koriyama-shi, Fukushima 963-8862 (JP); Ito, Koichi, Koriyama-shi, Fukushima 963-8862 (JP); Wang, Kaige, Koriyama-shi, Fukushima 963-8862 (JP)
(74) Representative: Schön, Christoph

(57) **Abstract**

There is provided a gas phase component analyzer which obtains excellent separation performance, when a gas phase component mixture generated by catalysis is analyzed on-line. A gas phase component analyzer 1 includes heating apparatuses 2 and 3 which generate a first gas phase component mixture, a catalyst 14, a carrier gas introduction apparatus 9, first pressure control apparatuses 17 and 20 which bring the first gas phase component mixture into contact with the catalyst 14 under a predetermined pressure, to generate a second gas phase component mixture, a gas conduit 16, a column 26, a detector 29, second pressure control apparatuses 21 and 24 which control the second gas phase component mixture to pressure at which passing the column 26 is possible and an analysis is possible.

## Description

### BACKGROUND OF THE INVENTION

### Field of the Invention

The present invention relates to a gas phase component analyzer used for the analysis of a gas phase component generated by catalysis for reacting a sample in the presence of a catalyst.

### Description of the Related Art

Recently, pressure dependency in catalysis for reacting a sample composed of a gas phase component in the presence of a catalyst is being examined. In the above catalysis, it is anticipated that the yield of a reaction product or the reaction product itself varies depending on pressure during reaction.

In order to examine the pressure dependency in the catalysis, it is desired that the composition of a product by the catalysis under high pressure is continuously analyzed on-line, namely by an analyzer directly connected to a reactor which performs the catalysis.

Heretofore, there is known a gas phase component analyzer capable of analyzing the yield, the composition, or the like of the product of the catalysis under a predetermined pressure on-line.

The gas phase component analyzer introduces a liquid sample stored in a sample container in a reactor with a predetermined pressure by an HPLC pump, and brings the liquid sample into contact with a catalyst disposed in the reactor, to perform the catalysis under the pressure. Then, after a gas phase component which is the reaction product of the catalysis is decompressed to the atmospheric pressure by a back pressure valve, the decompressed gas phase component is introduced in a column for gas chromatography, and separated components are detected by a mass spectrograph. As a result, according to the gas phase component analyzer, it is considered that the yield, the composition, or the like of the product of the catalysis under the predetermined pressure can be analyzed on-line (Henk L.C. Meuzelaar. et al., "DEVELOPMENT OF ON-LINE GC/MS MONITORING TECHNIQUES FOR HIGH PRESSURE FUEL CONVERSION PROCESSES", Center for Micro Analysis and Reaction Chemistry, University of Utah, pp.1147-1154, [Searched on March 10, 2014], Internet (URL: http: //web.anl.gov/PCS/acsfuel/preprint%20archive/Files/38_4_CHICAGO_08-93_1147.pdf)).

### SUMMARY OF THE INVENTION

However, in the above conventional gas phase component analyzer, the gas phase component that is the reaction product is decompressed to the atmospheric pressure by the back pressure valve, and therefore there is an inconvenience that the gas phase component needs to be sucked by a vacuum pump in order to introduce the gas phase component in the column for gas chromatography to perform an analysis. In the gas phase component analyzer, in a case where sufficient separation performance cannot be obtained, the length of the column for gas chromatography is generally increased in order to handle such a case. However, in a case where the gas phase component is sucked by the vacuum pump as described above, the length of the column for gas chromatography allowing the gas phase component to pass is limited, and therefore the length of the column for gas chromatography cannot be sufficiently increased.

On the other hand, this applicant proposes a gas phase component analyzer, in which a heating apparatus is connected to a gas chromatography apparatus, a first gas phase component mixture generated by heating a sample in the heating apparatus is further reacted in the heating apparatus as a raw material for the reaction, a generated second gas phase component mixture is separated by a column for gas chromatography, and separated gas phase component are detected by a mass spectrometer (see Japanese Patent Laid-Open No. 2000-28597).

In the gas phase component analyzer described in Japanese Patent Laid-Open No. 2000-28597, it is considered that while the catalyst is disposed in the heating apparatus, the pressure of carrier gas introduced in the heating apparatus is controlled to a predetermined pressure. Thus, the first gas phase component mixture comes into contact with the catalyst under the predetermined pressure, and the second gas phase component mixture is generated, so that knowledge regarding pressure dependency in catalysis when the second gas phase component mixture is generated can be obtained on-line.

The second gas phase component mixture is guided to the column for gas chromatography by the carrier gas, and a component that passes the column is detected by the mass spectrometer.

However, in the gas phase component analyzer, when the first gas phase component mixture comes into contact with the catalyst under the predetermined pressure which exceeds pressure at which the analysis can be performed by the column for gas chromatography, carrier gas with pressure at which the analysis cannot be performed by the column is introduced.

In this case, the retention time of the second gas phase component mixture in the column for gas chromatography is shortened compared to a case where the pressure is lower. As a result, even when components are the same, identification becomes difficult, or the same components are separated into a plurality of peaks. Consequently, there is inconvenience that it is not possible to obtain sufficient separation performance.

An object of the present invention is to provide a gas phase component analyzer which eliminates the above inconvenience, and is capable of reliably obtaining excellent separation performance, when the second gas phase component mixture generated by the catalysis is analyzed on-line.

In order to attain the above object, a gas phase component analyzer of the present invention comprises a heating apparatus which heats a sample to generate a first gas phase component mixture, a catalyst which is disposed inside the heating apparatus, and comes into contact with the first gas phase component mixture to generate a second gas phase component mixture, a carrier gas introduction apparatus which introduces carrier gas in the heating apparatus, a first pressure control apparatus which controls pressure of the carrier gas introduced in the heating apparatus to a predetermined pressure, when the first gas phase component mixture is brought into contact with the catalyst under the predetermined pressure, and the second gas phase component mixture is generated, a gas conduit which allows introduction of the carrier gas containing the second gas phase component mixture supplied from the heating apparatus, a column which is connected to the gas conduit, a detection apparatus which detects a gas phase component which passes the column; and a second pressure control apparatus which controls pressure of the carrier gas containing the second gas phase component mixture supplied from the heating apparatus, to pressure at which passing the column is possible and an analysis is possible.

In the gas phase component analyzer of the present invention, a column for gas chromatography (hereinafter abbreviated to GC column) can be used as the column. In the gas phase component analyzer of the present invention, the GC column is used as the column, so that the second gas phase component mixture can be analyzed by the gas chromatography.

In the gas phase component analyzer of the present invention, a column for a generated gas analysis (hereinafter abbreviated to EGA column) can be used as the column. In the gas phase component analyzer of the present invention, the EGA column is used as the column, so that the second gas phase component mixture can be analyzed by a generated gas analysis.

According to the gas phase component analyzer of the present invention, the sample introduced in the heating apparatus is first heated in the heating apparatus, so that the first gas phase component mixture is generated. The first gas phase component mixture comes into contact with the catalyst disposed inside the heating apparatus. At this time, the carrier gas introduced in the heating apparatus by the carrier gas introduction apparatus is controlled to the predetermined pressure by the first pressure control apparatus. Therefore, the first gas phase component mixture comes into contact with the catalyst under the predetermined pressure, and the second gas phase component mixture is generated as a result of catalysis by the action of the catalyst.

Then, the second gas phase component mixture is guided to the column through the gas conduit by the carrier gas, and the component which passes the column is detected by the mass spectrometer. However, in a case where the pressure of the carrier gas remains the predetermined pressure when the GC column is used as the column, the retention time of the second gas phase component mixture in the GC column is shortened compared to a case of low pressure, and the identification of the components becomes difficult even when the components are the same, or the same components are separated into a plurality of peaks, so that sufficient separation performance sometimes cannot be obtained.

Therefore, in the gas phase component analyzer of the present invention, the second pressure control apparatus then controls the pressure of the carrier gas containing the second gas phase component mixture, to the pressure at which passing the GC column is possible and the analysis is possible. Accordingly, according to the gas phase component analyzer of the present invention, the gas pressure in the inlet of the GC column can be made to be pressure suitable for the GC column, and when the second gas phase component mixture which is a reaction product by the catalysis is analyzed on-line, excellent separation performance can be obtained.

In the gas phase component analyzer of the present invention, a low-molecular weight and low-boiling point component which is contained in the second gas phase component mixture reaches the column without any problems, but it is feared that a high-molecular weight and high-boiling point component is cooled to liquefy or solidify at a part for connecting the gas conduit and the column. There is a problem that the composition of the second gas phase component mixture is changed, and the reliability of the analysis is lost, when the high-molecular weight and high-boiling point component liquefies or solidifies at the part for connecting the gas conduit and the column.

The gas phase component analyzer of the present invention preferably comprises a heating apparatus which heats a part for connecting the gas conduit and the column, to a temperature equal to or more than a boiling point of each gas phase component which configures the second gas phase component mixture. The heating apparatus heats the part for connecting the gas conduit and the column, to a temperature equal to or more than a boiling point of each gas phase component which configures the second gas phase component mixture, so that the high-molecular weight and high-boiling point component can be prevented from liquefying or solidifying in the flow passage resistance tube.

In this case, the heating apparatus is preferably a thermostatic oven which stores the part for connecting the gas conduit and the column. According to the thermostatic oven, the part for connecting the gas conduit and the column can be uniformly heated.

Additionally, when the heating apparatus generates the second gas phase component mixture as described above, the second gas phase component mixture is taken in a molecular structure or a carrier of the catalyst, and thermal desorption sometimes requires a long time. In this case, the second gas phase component mixture is supplied to the column over a long time, retention time until the detection of all components is finished becomes long, and the analysis becomes difficult.

The gas phase component analyzer of the present invention preferably comprises a gas phase component mixture capture apparatus which cools a part of an inlet of the column, and captures the second gas phase component mixture in the cooled part of the column, and a thermal desorption apparatus which heats the second gas phase component mixture captured by the gas phase component mixture capture apparatus, and thermally desorbs the heated second gas phase component mixture.

The gas phase component analyzer of the present invention comprises the gas phase component mixture capture apparatus, so that also when the second gas phase component mixture is supplied to the column over a long time, all components of the second gas phase component mixture can be captured in the cooled part of the column. Accordingly, the second gas phase component mixture captured in the cooled part of the column is heated to be thermally desorbed by the thermal desorption apparatus, so that all components of the second gas phase component mixture can be introduced in the column within a short time, and when the column is the GC column, the retention time is shortened, and excellent separation performance can be obtained.

In the gas phase component analyzer of the present invention, an apparatus which includes a first T-shaped splitter which is connected to the gas conduit, guides a part of the carrier gas containing the second gas phase component mixture to the column, and exhausts a remaining part, a first exhaust pipe which is connected to the first T-shaped splitter, and discharges the remaining part of the carrier gas containing the second gas phase component mixture to atmosphere, and a first back pressure valve which is provided in midway of the first exhaust pipe can be used as the first pressure control apparatus.

The first pressure control apparatus can regulate pressure of the first T-shaped splitter side to pressure in a range of 50 to 4000 kPa.

In the gas phase component analyzer of the present invention, an apparatus which includes a second T-shaped splitter which is connected to an upstream side of the column, guides a part of the carrier gas containing the second gas phase component mixture to the column, and exhausts a remaining part, a second exhaust pipe which is connected to the second T-shaped splitter, and discharges the remaining part of the carrier gas containing the second gas phase component mixture to atmosphere, and a second back pressure valve which is provided in a midway of the second exhaust pipe can be used as the second pressure control apparatus.

The second pressure control apparatus can regulate pressure of the second T-shaped splitter side to pressure in a range of 40 to 600 kPa.

### BRIEF DESCRIPTION OF THE DRAWINGS

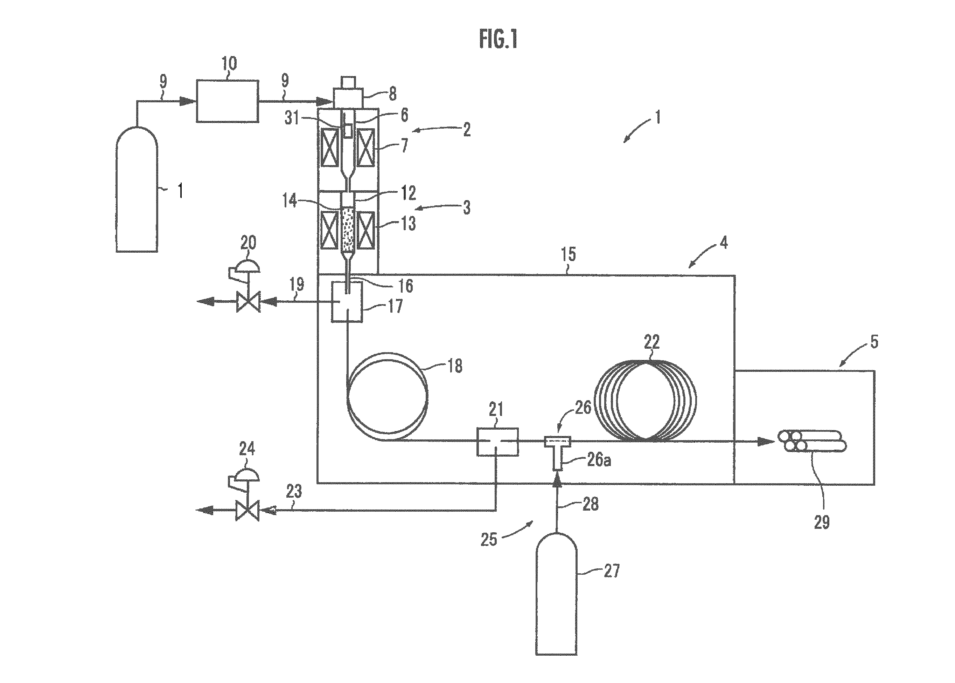

FIG. 1 is a system configuration diagram showing an example of an apparatus configuration of a gas phase component analyzer of the present invention;

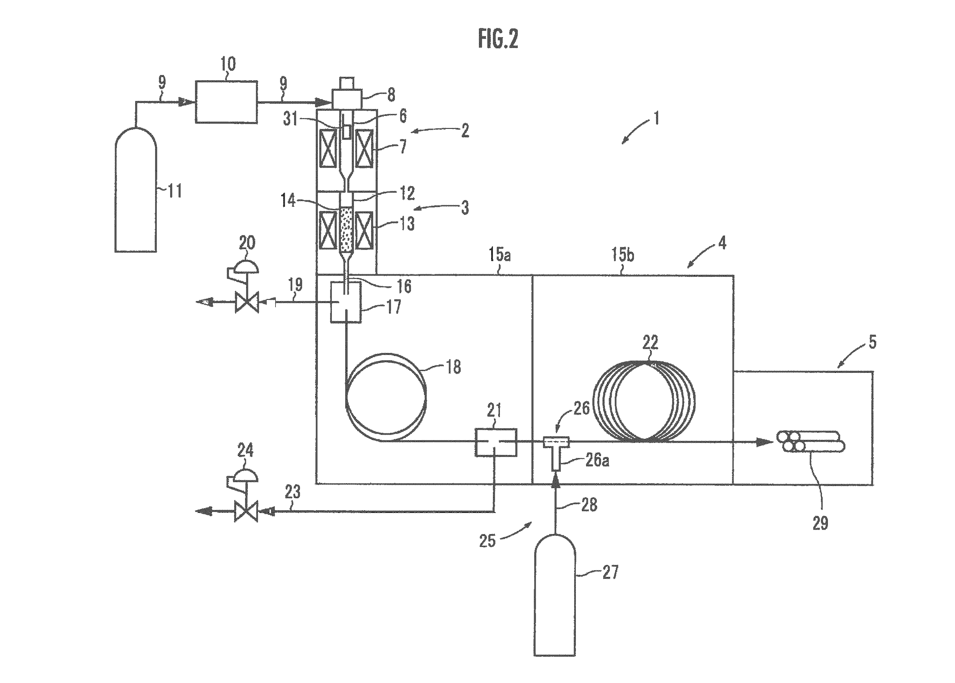

FIG. 2 is a system configuration diagram showing another example of the apparatus configuration of the gas phase component analyzer of the present invention;

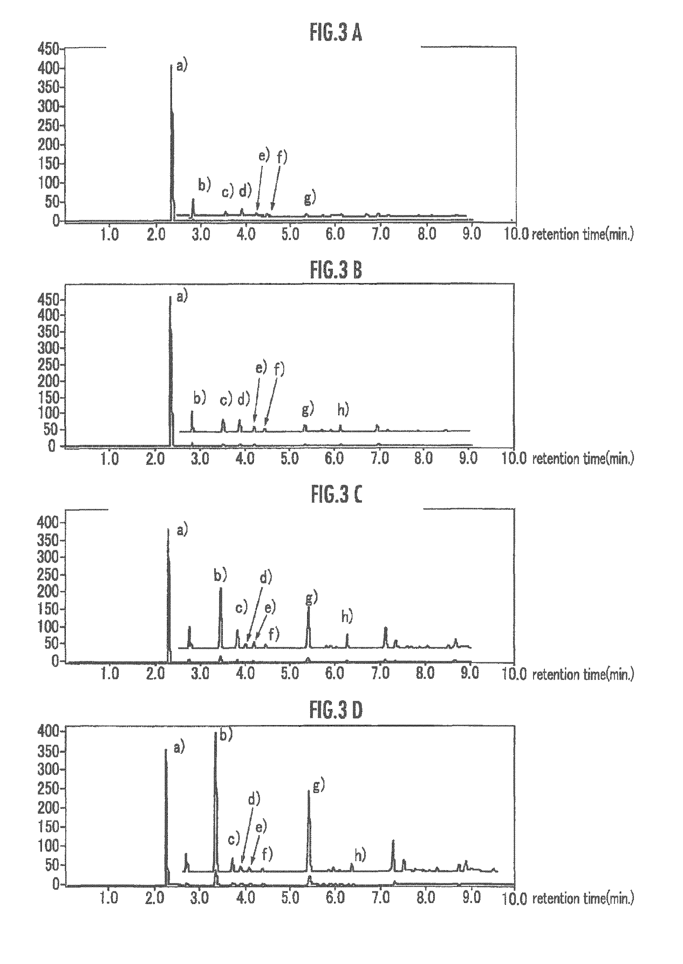

FIG. 3A is a chromatogram showing an analysis example by gas chromatography of reaction products generated by bringing a sample into contact with a porous catalyst under pressure of 500 kPa, by using the gas phase component analyzer of the present invention, FIG. 3B is a chromatogram showing an analysis example by gas chromatography of reaction products generated by bringing the sample into contact with the porous catalyst under pressure of 1000 kPa, FIG. 3C is a chromatogram showing an analysis example by gas chromatography of reaction products generated by bringing the sample into contact with the porous catalyst under pressure of 2000 kPa, and FIG. 3D is a chromatogram showing an analysis example by gas chromatography of reaction products generated by bringing the sample into contact with the porous catalyst under pressure of 4000 kPa;

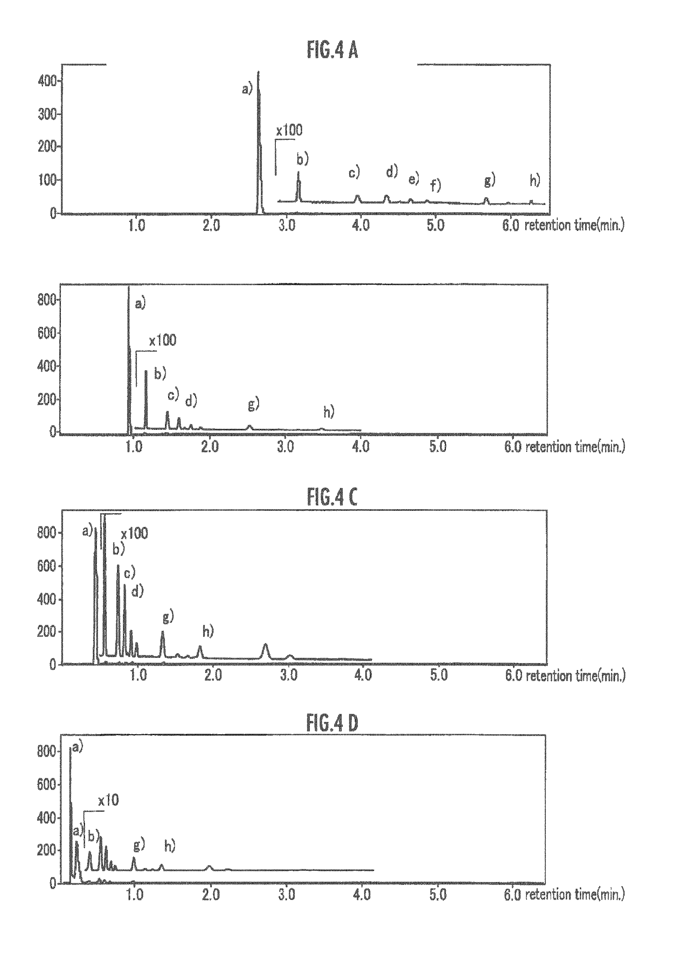

FIG. 4A is a chromatogram showing an analysis example by gas chromatography of reaction products generated by bringing a sample into contact with a porous catalyst under pressure of 70 kPa, by using a conventional gas phase component analyzer, FIG. 4B is a chromatogram showing an analysis example by gas chromatography of reaction products generated by bringing the sample into contact with the porous catalyst under pressure of 200 kPa, FIG. 4C is a chromatogram showing an analysis example by gas chromatography of reaction products generated by bringing the sample into contact with the porous catalyst under pressure of 400 kPa, and FIG. 4D is a chromatogram showing an analysis example by gas chromatography of reaction products generated by bringing the sample into contact with the porous catalyst under pressure of 600 kPa;

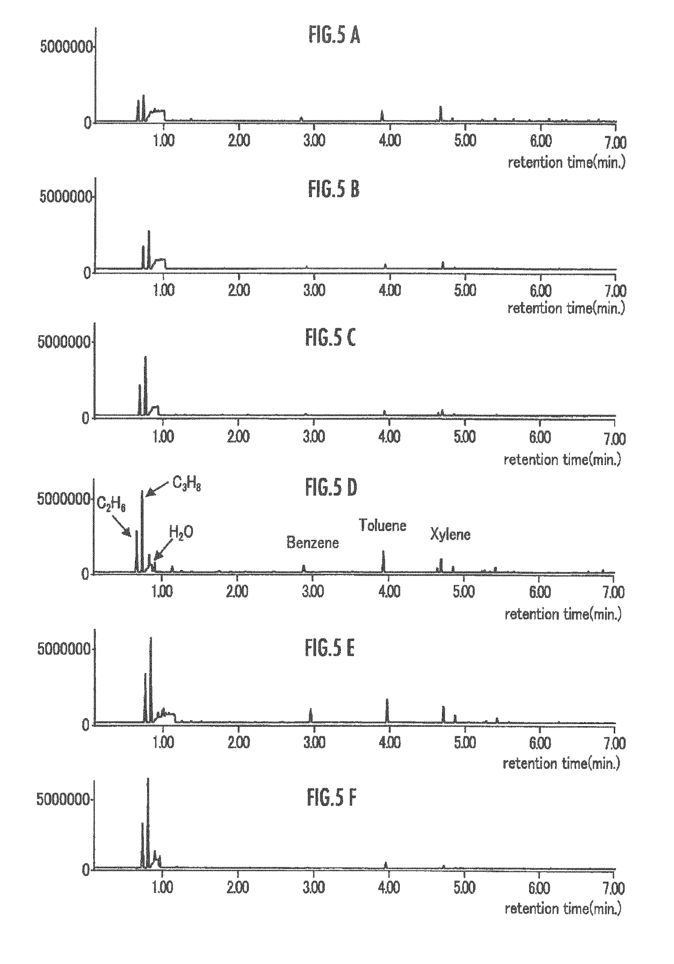

FIG. 5A is a chromatogram showing an analysis example by gas chromatography of reaction products generated by bringing a sample into contact with a porous catalyst under pressure of 50 kPa, by using the gas phase component analyzer of the present invention, FIG. 5B is a chromatogram showing an analysis example by gas chromatography of reaction products generated by bringing the sample into contact with the porous catalyst under pressure of 100 kPa, FIG. 5C is a chromatogram showing an analysis example by gas chromatography of reaction products generated by bringing the sample into contact with the porous catalyst under pressure of 200 kPa, FIG. 5D is a chromatogram showing an analysis example by gas chromatography of reaction products generated by bringing the sample into contact with the porous catalyst under pressure of 300 kPa, FIG. 5E is a chromatogram showing an analysis example by gas chromatography of reaction products generated by bringing the sample into contact with the porous catalyst under pressure of 400 kPa, and FIG. 5F is a chromatogram showing an analysis example by gas chromatography of reaction products generated by bringing the sample into contact with the porous catalyst under pressure of 580 kPa;

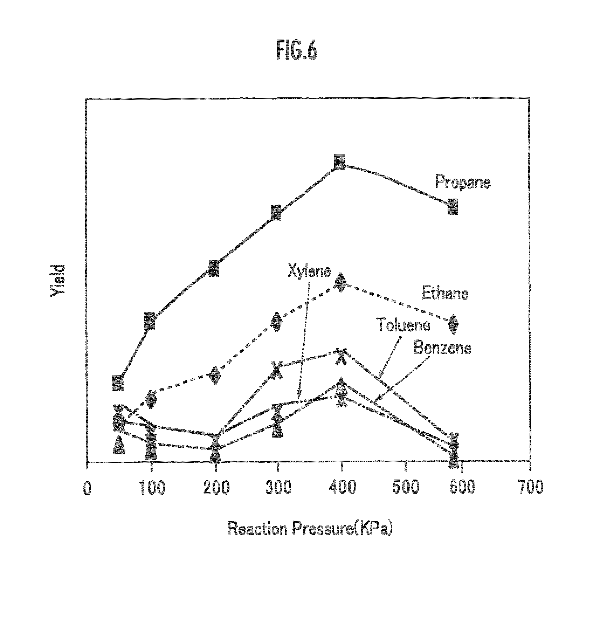

FIG. 6 is a graph showing relation between reaction pressure and yields of reaction products shown in FIG. 5;

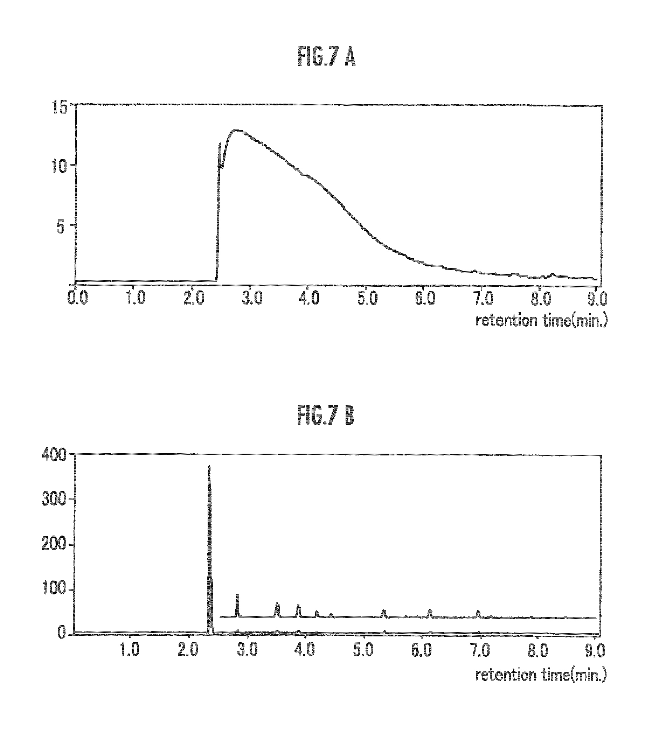

FIG. 7A is a chromatogram obtained in a case where a gas phase component mixture capture apparatus was not used when the gas chromatography of reaction products generated by bringing a sample into contact with a porous catalyst under pressure of 1000 kPa by using the gas phase component analyzer of the present invention, and FIG. 7B is a chromatogram obtained in a case where the gas phase component mixture capture apparatus was used;

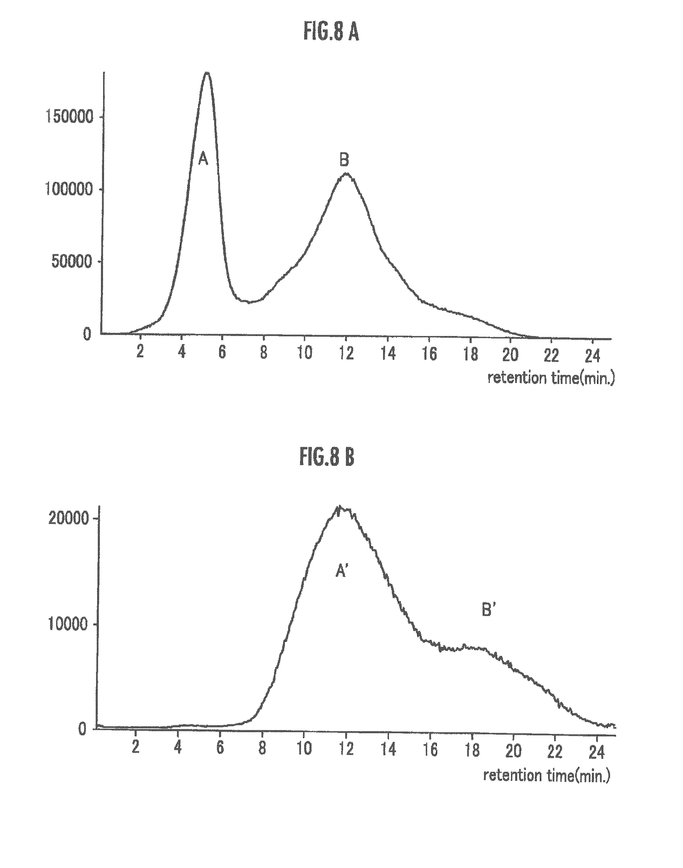

FIG. 8A is a thermogram obtained in a case where a sample was not brought into contact with a porous catalyst when the generated heat analysis of the sample was performed under pressure of 100 kPa by using the gas phase component analyzer of the present invention, and FIG. 8B is a thermogram obtained in a case where the sample was brought into contact with the porous catalyst; and

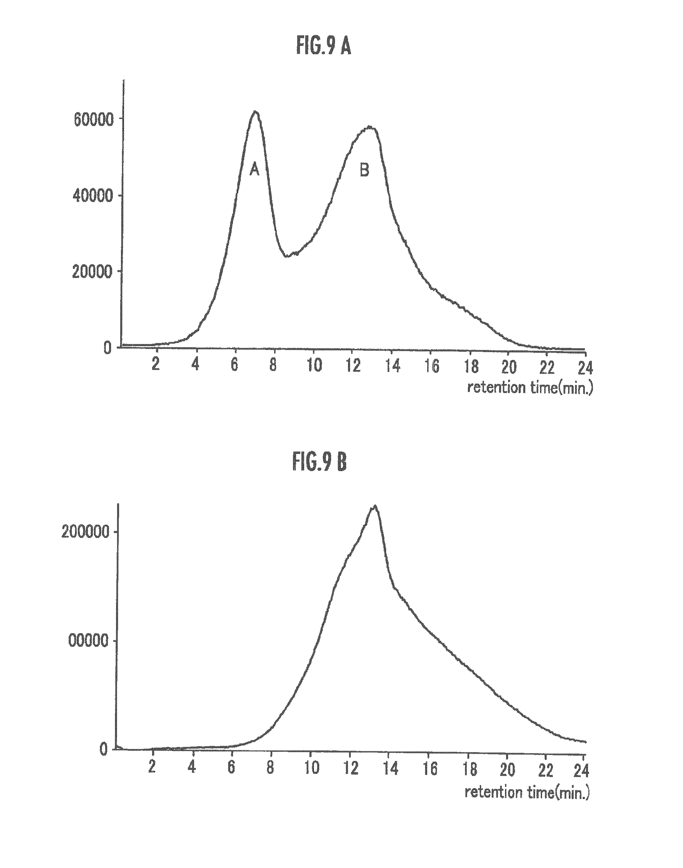

FIG. 9A is a thermogram obtained in a case where a sample was not brought into contact with a porous catalyst when the generated heat analysis of the sample was performed under pressure of 800 kPa by using the gas phase component analyzer of the present invention, and FIG. 9B is a thermogram obtained in a case where the sample was brought into contact with the porous catalyst.

### DETAILED DESCRIPTION OF THE PREFERRED EMBODIMENTS

Now, an embodiment of the present invention will be described in more detail with reference to the attached drawings.

As shown in FIG. 1, a gas phase component analyzer 1 of this embodiment comprises a first heating apparatus 2, a second heating apparatus 3 which is connected below the first heating apparatus 2, a gas chromatography apparatus 4 which is connected to the second heating apparatus 3, a detection apparatus 5 which is connected to the gas chromatography apparatus 4.

The first heating apparatus 2 comprises a first heating furnace 6 which is configured from a chemically inert silica tube, a first heater 7 which is provided around the first heating furnace 6, and the first heater 7 performs the heating of the first heating furnace 6 in a predetermined condition by a temperature control apparatus (not shown). The first heating furnace 6 may be a furnace which is configured from an inert tube obtained by forming a quartz thin film on the inner surface of a stainless tube, in place of the silica tube.

The first heating furnace 6 comprises a sample introduction part 8 which is connected above the first heating furnace 6. To the sample introduction part 8, a carrier gas conduit 9 that serves as a carrier gas introduction apparatus which introduces carrier gas in the first heating furnace 6 is connected. The other end of the carrier gas conduit 9 is connected to a high pressure gas source 11 through a flow controller 10. The flow controller 10 regulates the flow rate of carrier gas supplied from the high pressure gas source 11 to a predetermined flow rate, and introduces the regulated carrier gas in the first heating furnace 6. The flow controller 10 comprises a function of regulating the flow rate of the carrier gas, for example, in a range of 0 to 200 ml/min.

The second heating apparatus 3 comprises a second heating furnace 12 which is configured from a chemically inert silica tube, a second heater 13 which is provided around the second heating furnace 12, and the second heater 13 performs the heating of the second heating furnace 12 in a predetermined condition by the temperature control apparatus (not shown). Similarly to the first heating furnace 6, the second heating furnace 12 may be a furnace which is configured from an inert tube obtained by forming with a quartz thin film on the inner surface of a stainless tube, in place of the silica tube.

The second heating furnace 12 communicates with the first heating furnace 6 at the upper part, and is disposed with a catalyst pipe 14 therein. The catalyst pipe 14 is filled with a catalyst such as a porous catalyst or the like. The porous catalyst may be, for example, a catalyst obtained by carrying a metal catalyst such as platinum and palladium on a porous carrier such as zeolite and alumina, or may be a porous body which itself has a catalytic action such as zeolite.

The gas chromatography apparatus 4 comprises a thermostatic oven 15 which serves as a heating apparatus and a thermal desorption apparatus, and thermostatic oven 15 is heated in a predetermined temperature condition by the temperature control apparatus (not shown). A gas conduit 16 which communicates with the lower end of the second heating furnace 12 is inserted into the thermostatic oven 15, and the distal end of the gas conduit 16 is connected to a first T-shaped splitter 17 which is provided in thermostatic oven 15.

The proximal end of a flow passage resistance tube 18 is inserted into the first T-shaped splitter 17 so as to face the distal end of the gas conduit 16, the proximal end of a first exhaust pipe 19 is inserted into the first T-shaped splitter 17 from a direction intersecting with the gas conduit 16 and the flow passage resistance tube 18. As a result, inside the first T-shaped splitter 17, the gas conduit 16 and the flow passage resistance tube 18, and the first exhaust pipe 19 form a substantially T-shape.

The first exhaust pipe 19 is led out to the outside of thermostatic oven 15, and comprises a first back pressure valve 20 on the way thereof. The first back pressure valve 20 comprises a function of regulating the pressure of a side close to the first T-shaped splitter 17, for example, to pressure in the range of 50 to 4000 kPa. As a result, the first back pressure valve 20 forms a first pressure control apparatus which regulates the pressure of carrier gas introduced in the second heating furnace 12 to pressure in the range of 50 to 4000 kPa.

Inside thermostatic oven 15, the distal end of the flow passage resistance tube 18 is connected to a second T-shaped splitter 21. The flow passage resistance tube 18 may be any tube which serves as flow passage resistance of a gas component introduced through the first T-shaped splitter 17, and is capable of limiting the flow rate of the gas component. For example, a molten silica capillary tube or a stainless-steel capillary tube whose inner surface is inactivated can be used.

The proximal end of a column 22 is inserted into the second T-shaped splitter 21 so as to face the distal end of the flow passage resistance tube 18, the proximal end of a second exhaust pipe 23 is inserted into the second T-shaped splitter 21 from a direction intersecting with the flow passage resistance tube 18 and the column 22, and the flow passage resistance tube 18 and the column 22, and the second exhaust pipe 23 form a substantially T-shape.

The second exhaust pipe 23 is led out to the outside of thermostatic oven 15, and comprises a second back pressure valve 24 on the way thereof. The second back pressure valve 24 comprises a function of regulating the pressure of a side close to the second T-shaped splitter 21, for example, to pressure in the range of 40 to 600 kPa. As a result, in the gas phase component analyzer 1 of this embodiment, the second back pressure valve 24 forms a second pressure control apparatus which regulates the pressure of a gas component introduced through the first T-shaped splitter 17 to pressure in the range where passing the column 22 is possible and an analysis is possible.

Inside thermostatic oven 15, the proximal end of the column 22 is provided with a cooling trap 25. The cooling trap 25 is an apparatus which captures the gas component introduced through the second T-shaped splitter 21 in the proximal end of the column 22, and comprises T-shaped tube 26 into which the column 22 is inserted, and a part, facing the proximal end of the column 22, of the T-shaped tube 26 is a nozzle 26a. A liquefied inert gas conduit 28 which supplies liquefied inert gas from a liquefied inert gas source 27 provided outside thermostatic oven 15 is connected to the nozzle 26a. As the liquefied inert gas, for example, liquid nitrogen can be used. The cooling trap 25 is described in detail in Japanese Patent Laid-Open No. 2000-171449.

In the gas phase component analyzer 1 of this embodiment, the proximal end of the column 22 may be immersed in a Dewar vessel (not shown) which stores liquid nitrogen, in place of the cooling trap 25, and the gas component introduced through the second T-shaped splitter 21 may be captured in the distal end.

As the column 22, a GC column which is configured from a metal capillary column (e.g., UltraALLOY (registered trademark) manufactured by Frontier Laboratories Ltd.) obtained by inactivating the inner surface of a stainless tube, and forming a stationary phase composed of dimethylpolysiloxane and the like can be used. The gas phase component analyzer 1 of this embodiment can be used for gas chromatography, by using the GC column as the column 22.

Additionally, as the column 22, an EGA column which is configured by merely inactivating the inner surface of a stainless tube, and does not comprise the stationary phase can be used. The gas phase component analyzer 1 of this embodiment can be used for a generated gas analysis by using the EGA column as the column 22.

The detection apparatus 5 is provided adjacent to the thermostatic oven 15, and the distal end of the column 22 is connected to a detector 29 which is provided in the detection apparatus 5. As the detector 29, a mass spectrograph (MS) such as a quadruple mass spectrometer, a hydrogen flame ionizing type detector (FID), or the like can be used.

Now, operation of the gas phase component analyzer 1 of this embodiment will be described.

In the gas phase component analyzer 1 of this embodiment, a sample is first introduced from the sample introduction part 8 in the first heating furnace 6 to be thermally decomposed instantaneously in a state where the first heater 7 increases the temperature of the inside of the first heating furnace 6 to a predetermined temperature, so that a first gas phase component mixture is generated. In a case where the sample is gas at a normal temperature, the sample can be introduced in the first heating furnace 6 without operating the first heater 7.

Alternatively, after the sample is introduced from the sample introduction part 8 in the first heating furnace 6, the first heater 7 may increase the temperature of the inside of the first heating furnace 6 under a predetermined condition to generate a gas phase component from the sample, to generate the first gas phase component mixture.

In a case where the sample is a solid, the sample can be stored in the sample cup 31 to be introduced in the first heating furnace 6. In a case where the sample is liquid or gas, the sample can be introduced in the first heating furnace 6 by a syringe (not shown).

Then, the first gas phase component mixture is guided in the second heating furnace 12 by carrier gas introduced from the high pressure gas source 11 in the first heating furnace 6 through the carrier gas conduit 9, and is brought into contact with the porous catalyst filled in the catalyst pipe 14. At this time, the carrier gas is regulated to a flow rate of 5 to 200 ml/min by the flow controller 10, and regulated to pressure in the range of 50 to 4000 kPa by the function of the first back pressure valve 20 which is connected to the first T-shaped splitter 17 through the first exhaust pipe 19. The first gas phase component mixture comes into contact with the porous catalyst under the pressure in the above range, and a second gas phase component mixture is generated as a result of catalysis by the action of the porous catalyst.

At this time, the temperature of the inside of the second heating furnace 12 may be heated under the predetermined condition by the second heater 13, or may not be heated. Additionally, when the first gas phase component mixture is brought into contact with the porous catalyst, for example, gas such as hydrogen, the flow rate of which is regulated, may be introduced in the second heating furnace 12 to be reacted with the first gas phase component mixture.

The second gas phase component mixture is guided to the first T-shaped splitter 17 through the gas conduit 16 by the carrier gas, to be introduced from the first T-shaped splitter 17 in the flow passage resistance tube 18. Then, the pressure of the carrier gas which contains the second gas phase component mixture is reduced by the flow passage resistance tube 18, to be guided to the second T-shaped splitter 21.

Herein, the pressure of the carrier gas which contains the second gas phase component mixture is decompressed to pressure in the range of 40 to 600 kPa, at which, when the column 22 is the GC column, the passing the GC column is possible and an analysis is possible, by the cooperation of the flow passage resistance tube 18, and the second back pressure valve 24 which is connected to the second T-shaped splitter 21 through the second exhaust pipe 23.

The carrier gas which contains the second gas phase component mixture, the pressure of which is decompressed to the pressure in the above range is introduced in the proximal end of the column 22, to be guided to the cooling trap 25. In the cooling trap 25, liquefied inert gas such as liquid nitrogen, which is supplied from the liquefied inert gas source 27 through the liquefied inert gas conduit 28, and jetted from the nozzle 26a, cools a part of the column 22 facing the nozzle 26a, to the temperature of the liquefied inert gas.

The second gas phase component mixture guided to the cooling trap 25 by the carrier gas is captured in the part of the column 22 facing the nozzle 26a. Accordingly, also in a case where the second gas phase component mixture which is taken in the catalyst continues to thermally desorb over a long time in the second heating furnace 12, all components of the second gas phase component mixture can be cooled and flocculated to be captured and concentrated in the part of the column 22 facing the nozzle 26a.

The second gas phase component mixture captured in the cooling trap 25 is thermally desorbed, so that the second gas phase component mixture which is released is introduced in the column 22 which is the GC column, by the carrier gas. The thermal desorption of the second gas phase component mixture from the cooling trap 25 can be performed by stopping the supply of the liquefied inert gas from the liquefied inert gas source 27, and increasing the temperature of the inside of thermostatic oven 15 serving as thermal desorption apparatus, to a predetermined temperature.

The second gas phase component mixture is separated for each component by using the GC column as the column 22 in thermostatic oven 15 which is heated to a predetermined temperature, and a chromatogram can be obtained by the detection by the detector 29 such as a MS or the like. At this time, all components of the second gas phase component mixture are captured in the proximal end of the column 22 by using the cooling trap 25, so that the GC column used as the column 22 can exert excellent separation performance.

In the gas phase component analyzer 1 of this embodiment, in a case where the molecular weight of the sample is small, and the generation of the second gas phase component mixture in the second heating furnace 12 is finished in several tens seconds, the cooling trap 25 may not be used.

In the gas phase component analyzer 1 of this embodiment, a generated gas analysis can be also performed by using an EGA column as the column 22. Also in a case where the generated gas analysis is performed, the cooling trap 25 may not be used. As the EGA column, for example, a stainless tube which has an inactivated inner surface, and does not comprise a stationary phase can be used.

In the gas phase component analyzer 1 of this embodiment, when the second gas phase component mixture and the carrier gas which are each regulated to the pressure in the range of 50 to 4000 kPa by the function of the first back pressure valve 20 can be decompressed to pressure in the range of 40 to 600 kPa only by the second back pressure valve 24, the flow passage resistance tube 18 may not be used. In this case, a conduit such as a stainless tube which has an inactivated inner surface is used in place of the flow passage resistance tube 18.

In the gas phase component analyzer 1 of this embodiment, when the analysis of the second gas phase component mixture is performed as described above, it is feared that a high-molecular weight and high-boiling point component contained in the second gas phase component mixture is cooled to liquefy or solidify in the flow passage resistance tube 18. There is a problem that the composition of the second gas phase component mixture is changed, and the reliability of the analysis is lost, when the high-molecular weight and high-boiling point component liquefies or solidifies in the flow passage resistance tube 18.

Therefore, in the gas phase component analyzer 1 of this embodiment, thermostatic oven 15 which serves as a heating apparatus heats the flow passage resistance tube 18 to a temperature of at least the boiling point of each gas phase component which configures the second gas phase component mixture. Thus, the high-molecular weight and high-boiling point component is prevented from liquefying or solidifying in the flow passage resistance tube 18, and the reliability of the analysis can be secured.

In order to heat the flow passage resistance tube 18 by thermostatic oven 15 as described above, the gas phase component analyzer 1 of this embodiment may comprise a first thermostatic oven 15a which stores a flow passage resistance tube 18, and a second thermostatic oven 15b which stores a column 22 and a T-shaped tube 26, as shown in FIG. 2. In this case, the first thermostatic oven 15a and the second thermostatic oven 15b are independently controlled by respective independent temperature control apparatuses (not shown).

In the gas phase component analyzer 1 of this embodiment, the first thermostatic oven 15a and the second thermostatic oven 15b are independently controlled, so that the prevention of liquefaction or solidification of the high-molecular weight and high-boiling point component by the first thermostatic oven 15a, and the separation of the second gas phase component mixture by the second thermostatic oven 15b can be performed in respective suitable temperature conditions.

In this embodiment, the thermostatic oven 15 or the first thermostatic oven 15a performs the heating of the flow passage resistance tube 18. However, other heating apparatus such as a heater may be used.

Examples of the present invention and a comparative example will be now shown.

### [Example 1]

In this example, in the gas phase component analyzer 1 shown in FIG. 1, while ethanol was used as a sample and volatilized in the first heating furnace 6, so that a first gas phase component mixture was generated, helium was used as carrier gas, and introduced from the high pressure gas source 11 in the first heating furnace 6 through the flow controller 10 at a flow rate of 100 ml/min. Then, the first gas phase component mixture was introduced in the second heating furnace 12 heated to a predetermined temperature by the carrier gas whose flow rate was in the above range, and was brought into contact with a porous catalyst filled in the catalyst pipe 14, so that a second gas phase component mixture was generated. As the porous catalyst, zeolite (ZSM-5) was used.

At this time, the first back pressure valve 20 controlled the pressure of the inside of the second heating furnace 12 to pressure in the range of 500 to 4000 kPa, and brought the first gas phase component mixture into contact with the porous catalyst under the pressure in the above range.

Next, the flow passage resistance tube 18 and the second back pressure valve 24 decompressed the pressure of a side close to the second T-shaped splitter 21 to pressure of 100 kPa. Herein, as the flow passage resistance tube 18, a stainless-steel capillary tube whose inner surface had an inner diameter of 30 µm and a length of 50 cm, and was inactivated by a quartz thin film was used. Then, the second gas phase component mixture decompressed to the above pressure was separated for each component by using a GC column used as the column 22, and separated components were detected by using a quadrupole MS as the detector 29.

As the GC column, a metal capillary column having an inner diameter of 250 µm and a length of 30 m was used. An obtained chromatogram is shown in FIG. 3.

FIG. 3A shows a case where pressure when ethanol is brought into contact with the porous catalyst is 500 kPa, FIG. 3B shows a case where the pressure is 1000 kPa, FIG. 3C shows a case where the pressure is 2000 kPa, and FIG. 3D shows a case where the pressure is 4000 kPa. A peak a is ethylene, a peak b is propylene, a peak c is acetaldehyde, a peak d is isobutane, a peak e is trans-butane, a peak f is cis-butane, a peak g is ethanol, and a peak h is diethyl ether.

### [Comparative Example 1]

In this comparative example, while the first back pressure valve 20 controlled the pressure of the inside of the second heating furnace 12 to pressure in the range of 70 to 600 kPa, a second gas phase component mixture was separated for each component in a manner which is identical with that of Example 1 except that the flow passage resistance tube 18 and the second back pressure valve 24 were not used at all, and separated components were detected. An obtained chromatogram is shown in FIG. 4.

FIG. 4A shows a case where pressure when ethanol is brought into contact with the porous catalyst is 70 kPa, FIG. 4B shows a case where the pressure is 200 kPa, FIG. 4C shows a case where the pressure is 400 kPa, and FIG. 4D shows a case where the pressure is 600 kPa. Peaks a to h are the same as those of Example 1.

From FIG. 3 and FIG. 4, it is clear that while the retention times of the respective components are substantially the same regardless of pressure, and the identification of the respective components is easy in Example 1, the retention time of each component is shortened as the pressure increases, and the identification of each component becomes difficult in Comparative Example 1.

Additionally, from FIG. 3 and FIG. 4, it is clear that while the peak of each component is single regardless of the pressure, and excellent separation performance can be obtained in Example 1, the peak a corresponding to ethylene is separated into two, and excellent separation performance cannot be obtained in a case shown in FIG. 4D of Comparative Example 1.

Accordingly, it is clear that the gas phase component analyzer 1 shown in FIG. 1 can be used for chromatography of a reaction product under high pressure in the range of 500 to 4000 kPa.

### [Example 2]

In this example, in the gas phase component analyzer 1 shown in FIG. 1, while glycerin was used as a sample and volatilized in the first heating furnace 6 which was heated to a temperature of 300°C, so that a first gas phase component mixture was generated, helium was used as carrier gas, and introduced from the high pressure gas source 11 in the first heating furnace 6 through the flow controller 10 at a flow rate of 50 ml/min.

Additionally, hydrogen was used carrier gas, and introduced at a flow rate of 50 ml/min from between the first heating furnace 6 and the second heating furnace 12, and the first gas phase component mixture was introduced in the second heating furnace 12 heated to a temperature of 200°C by carrier gas which was composed of helium and hydrogen with above flow rates, and was brought into contact with a porous catalyst filled in the catalyst pipe 14, so that a second gas phase component mixture was generated.

The above hydrogen was introduced from the high pressure gas source (not shown) through the flow controller (not shown), similarly to the above helium. As the porous catalyst, palladium which is carried on alumina at a rate of 0.2 mass% based on the total amount was used.

At this time, the first back pressure valve 20 controlled the pressure of the inside of the second heating furnace 12 to pressure in the range of 50 to 580 kPa, and brought the first gas phase component mixture into contact with the porous catalyst under the pressure in the above range.

Next, the flow passage resistance tube 18 and the second back pressure valve 24 decompressed the pressure of a side close to the second T-shaped splitter 21 to pressure of 50 kPa. Herein, as the flow passage resistance tube 18, a molten silica capillary tube whose inner surface had an inner diameter of 100 µm and a length of 200 cm was used. Then, a second gas phase component mixture decompressed to the above pressure was separated for each component by using a GC column as the column 22, and separated components were detected by using a quadrupole MS as the detector 29.

As the GC column, a metal capillary column having an inner diameter of 250 µm and a length of 30 m, and formed with a stationary phase having a thickness of 1 µm was used. The stationary phase comprised 5 mass% of diphenyl and 95 mass% of dimethyl silicone based on the total amount. An obtained chromatogram is shown in FIG. 5.

FIG. 5A shows a case where pressure when glycerin is brought into contact with the porous catalyst is 50 kPa, FIG. 5B shows a case where the pressure is 100 kPa, FIG. 5C shows a case where the pressure is 200 kPa, FIG. 5D shows a case where the pressure is 300 kPa, FIG. 5E shows a case where the pressure is 400 kPa, and FIG. 5F shows a case where the pressure is 580 kPa.

The area of each peak of FIG. 5 is used as the yield of each component, and relation between the yield of each component, and pressure (reaction pressure) when glycerin is brought into contact with the porous catalyst is shown in FIG. 6. From FIG. 6, it is clear that the yield of each component becomes maximum in a case where the reaction pressure is 400 kPa, and the gas phase component analyzer 1 shown in FIG. 1 can be used for examining the pressure dependency in catalysis by chromatography.

### [Example 3]

In this example, in the gas phase component analyzer 1 shown in FIG. 1, while 1 µL of ethanol was used as a sample, injected into the first heating furnace 6 held at a temperature of 100°C by using a microsyringe, and volatilized, so that a first gas phase component mixture is generated, helium was used as carrier gas, and introduced from the high pressure gas source 11 in the first heating furnace 6 through the flow controller 10 at a flow rate of 100 ml/min. Then, the first gas phase component mixture was introduced in the second heating furnace 12 heated to a predetermined temperature by the carrier gas whose flow rate was in the above range, and was brought into contact with a porous catalyst filled in the catalyst pipe 14, so that a second gas phase component mixture was generated. As the porous catalyst, zeolite (ZSM-5) was used.

At this time, while the temperature of the inside of the second heating furnace 12 is heated to 230°C, the first back pressure valve 20 controlled the pressure of the inside of the second heating furnace 12 to pressure of 1000 kPa, and brought the first gas phase component mixture into contact with the porous catalyst under the above pressure.

Next, the flow passage resistance tube 18 and the second back pressure valve 24 decompressed the pressure of a side close to the second T-shaped splitter 21 to pressure of 100 kPa. Herein, as the flow passage resistance tube 18, a metal capillary tube whose inner surface had an inner diameter of 30 µm and a length of 25 cm, and was inactivated was used. Then, the second gas phase component mixture decompressed to the above pressure was separated for each component by using a GC column as the column 22, and separated components were detected by using a quadrupole MS as the detector 29. As the GC column, a metal capillary column having an inner diameter of 250 µm and a length of 35 m was used.

FIG. 7A shows a chromatogram obtained in a case where the cooling trap 25 was not used at all. FIG. 7B shows a chromatogram obtained in a case where the cooling trap 25 was used, liquid nitrogen was jetted to the proximal end of the column 22 at 4 L/min for 8 minutes, the second gas phase component mixture was cooled and flocculated to be captured and concentrated in the proximal end of the column 22, and thereafter was thermally desorbed.

It is found from FIG. 7A that in the case where the cooling trap 25 was not used at all, ethylene which is the main component of the second gas phase component mixture is desorbed from the catalyst for about 5 minutes, and separation from other components is insufficient. On the other hand, it is clear that in a case where the cooling trap 25 was used, the second gas phase component mixture is concentrated, and thereafter thermally desorbed, so that ethylene which is the main component can be excellently separated from other components.

### [Example 4]

In this example, in the gas phase component analyzer 1 shown in FIG. 1, strained lees of Jatropha oil was used as a sample, and heated from a temperature of 100°C to a temperature of 600°C at a temperature rising rate of 20°C/min in the first heating furnace 6. While gas phase components were generated by the above heating and a first gas phase component mixture was generated, helium was used as carrier gas, and introduced from the high pressure gas source 11 in the first heating furnace 6 through the flow controller 10 at a flow rate of 50 ml/min. Then, the first gas phase component mixture was introduced into the second heating furnace 12 heated to a predetermined temperature by the carrier gas having the above flow rate, so that a second gas phase component mixture was generated without coming into contact with a porous catalyst.

At this time, the first back pressure valve 20 controlled the pressure of the inside of the second heating furnace 12 to pressure of 100 kPa.

Next, the flow passage resistance tube 18 and the second back pressure valve 24 decompressed the pressure of a side close to the second T-shaped splitter 21 to pressure of 40 kPa. Herein, as the flow passage resistance tube 18, a metal capillary tube whose inner surface had an inner diameter of 50 µm and a length of 80 cm was used. Then, the second gas phase component mixture which was decompressed to the above pressure was made to pass an EGA column used as the column 22, the intensity of a component which passed was detected by using a mass spectrometric detector (MS) as the detector 29. At this time, the temperature of the thermostatic oven 15 was set to 250°C.

As the EGA column, a stainless tube whose inner surface had an inner diameter of 150 µm and a length of 2.5 m, and was inactivated was used. The stainless tube which has the inactivated inner surface does not comprise a stationary phase. An obtained thermogram is shown in FIG. 8A.

In FIG. 8A, a peak A is a fatty acid ester triglyceride, and a peak B is a component which forms a plant body such as hemicellulose, cellulose, and lignin.

The intensity of a component which passed the column 22 was detected in a manner which is identical with the above except that the first gas phase component mixture was introduced in the second heating furnace 12 heated to a predetermined temperature by the carrier gas having the above pressure, and brought into contact with a porous catalyst filled in the catalyst pipe 14 under the above pressure of 100 kPa, so that the second gas phase component mixture was generated. As the porous catalyst, a zeolite (ZSM-5) was used. An obtained thermogram is shown in FIG. 8B.

In FIG. 8B, it is considered that a peak A' corresponds to a catalytic reaction product whose row material is the fatty acid ester triglyceride, and a peak B' corresponds to a catalytic reaction product whose row material is a component which forms a plant body such as hemicellulose, cellulose, and lignin.

### [Example 5]

In this example, the intensity of a component which passed the column 22 was detected in a manner which is identical with Example 4 except that the first back pressure valve 20 controlled the pressure of the inside of the second heating furnace 12 to pressure of 800 kPa.

FIG. 9A shows a thermogram obtained in a case where a second gas phase component mixture was generated without bringing a first gas phase component mixture into contact with a porous catalyst. In FIG. 9A, a peak A is a fatty acid ester triglyceride, a peak B is a component which forms a plant body such as hemicellulose, cellulose, and lignin.

FIG. 9B shows a thermogram obtained in a case where a first gas phase component mixture was brought into contact with a porous catalyst filled in the catalyst pipe 14, so that a second gas phase component mixture was generated.

In FIG. 9B, it is considered that a peak corresponds to a component obtained by unifying a catalytic reaction product whose row material is the fatty acid ester triglyceride, and a catalytic reaction product whose row material is a component which forms a plant body such as hemicellulose, cellulose, and lignin.

From FIG. 8 and FIG. 9, it is clear that the gas phase component analyzer 1 shown in FIG. 1 can be used for examining pressure dependency in catalysis by a generated gas analyzing method.

## Claims

1. A gas phase component analyzer comprising:
a heating apparatus which heats a sample to generate a first gas phase component mixture;
a catalyst which is disposed inside the heating apparatus, and comes into contact with the first gas phase component mixture to generate a second gas phase component mixture;
a carrier gas introduction apparatus which introduces carrier gas in the heating apparatus;
a first pressure control apparatus which controls pressure of the carrier gas introduced in the heating apparatus to a predetermined pressure, when the first gas phase component mixture is brought into contact with the catalyst under the predetermined pressure, and the second gas phase component mixture is generated;
a gas conduit which allows introduction of the carrier gas containing the second gas phase component mixture supplied from the heating apparatus;
a column which is connected to the gas conduit;
a detection apparatus which detects a gas phase component which passes the column; and
a second pressure control apparatus which controls pressure of the carrier gas containing the second gas phase component mixture supplied from the heating apparatus, to pressure at which passing the column is possible and an analysis is possible.

2. The gas phase component analyzer according to claim 1, wherein
the column is a column for gas chromatography.

3. The gas phase component analyzer according to claim 1, wherein
the column is a column for a generated gas analysis.

4. The gas phase component analyzer according to claim 1, comprising
a heating apparatus which heats a part for connecting the gas conduit and the column, to a temperature equal to or more than a boiling point of each gas phase component which configures the second gas phase component mixture.

5. The gas phase component analyzer according to claim 4, wherein
the heating apparatus is a thermostatic oven which stores the part for connecting the gas conduit and the column.

6. The gas phase component analyzer according to claim 1, comprising
a gas phase component mixture capture apparatus which cools a part of an inlet side of the column, and captures the second gas phase component mixture in the cooled part of the column; and
a thermal desorption apparatus which heats the second gas phase component mixture captured by the gas phase component mixture capture apparatus, and thermally desorbs the heated second gas phase component mixture.

7. The gas phase component analyzer according to claim 1, wherein
the first pressure control apparatus includes:
a first T-shaped splitter which is connected to the gas conduit, guides a part of the carrier gas containing the second gas phase component mixture to the column, and exhausts a remaining part;
a first exhaust pipe which is connected to the first T-shaped splitter, and discharges the remaining part of the carrier gas containing the second gas phase component mixture to atmosphere; and
a first back pressure valve which is provided on a way of the first exhaust pipe.

8. The gas phase component analyzer according to claim 7, wherein
the first pressure control apparatus regulates pressure of the first T-shaped splitter side to pressure in a range of 50 to 4000 kPa.

9. The gas phase component analyzer according to claim 1, wherein
the second pressure control apparatus includes:
a second T-shaped splitter which is connected to an upstream side of the column, guides a part of the carrier gas containing the second gas phase component mixture to the column, and exhausts a remaining part;
a second exhaust pipe which is connected to the second T-shaped splitter, and discharges the remaining part of the carrier gas containing the second gas phase component mixture to atmosphere; and
a second back pressure valve which is provided on a way of the second exhaust pipe.

10. The gas phase component analyzer according to claim 9, wherein
the second pressure control apparatus regulates pressure of the second T-shaped splitter side to pressure in a range of 40 to 600 kPa.
